# FASCICULE DE BREVET EUROPEEN

(11) **EP 0 499 530 B1**
(45) Date de publication et mention de la délivrance du brevet: **27.07.1994**
(21) Numéro de dépôt: 92400355.1
(22) Date de dépôt: 11.02.1992
(51) Int. Cl.: B60J 10/06

(54) **Profilé d'étanchéité équipé d'un enjoliveur, pour encadrement d'une vitre mobile d'un véhicule**
Dichtungszierleiste für das Einfassen einer beweglichen Kraftfahrzeugscheibe
Sealing joint with embellishment to act as frame for a movable vehicle window

(30) Priorité: 14.02.1991 FR 9101748
(43) Date de publication de la demande: 19.08.1992
(73) Titulaire: ETABLISSEMENTS MESNEL SOCIETE ANONYME DITE :, F-78420 Carrières-Sur-Seine (FR)
(72) Inventeur: Mesnel, François, F-92200 Neuilly-sur-Seine (FR); Mesnel, Gérard, F-78420 Carrières-sur-Seine (FR)
(74) Mandataire: Jolly, Jean-Pierre

(56) Documents cités:
- EP-A- 0 368 521
- FR-A- 2 089 437
- US-A- 4 949 507

## Description

La présente invention concerne un profilé d'étanchéité équipé d'un enjoliveur, pour encadrement d'une vitre mobile d'un véhicule, notamment d'une automobile.

On sait qu'il est nécessaire d'assurer l'étanchéité à la périphérie des vitres coulissantes des portes d'automobiles et que, dans ce but, on utilise habituellement un profilé en une matière résiliente, équipé d'une armature métallique, qui comporte deux parties à sections en U inversées, l'une de ces parties en U, ou pince, étant destinée à coiffer et à pincer un bord saillant de l'encadrement de vitre, afin d'en rendre rigidement solidaire le profilé, tandis que la seconde partie à section en U, ou coulisse, est destinée à guider la vitre dans son mouvement de coulissement et à la recevoir en position de fermeture. De tels profilés sont décrits, par exemple, dans les brevet et certificat d'addition FR-E-2 623 596 et FR-A-2 638 780 appartenant à la Demanderesse.

La portion de la coulisse tournée vers l'extérieur du véhicule est fréquemment équipée d'un organe auxiliaire destiné à la dissimuler au regard et à l'enjoliver. Cet enjoliveur, en métal ou en matière plastique, suit le profil de la coulisse et est généralement riveté sur le bord saillant de l'encadrement de porte, le profilé n'étant mis en position sur ce bord saillant qu'après fixation de l'enjoliveur.

FR-A-2 089 437 décrit un profilé équipé d'un enjoliveur métallique, dont les bords sont logés dans des rainures derrière deux nervures du matériau dont est constitué le profilé. L'enjoliveur risque donc de se désolidariser du profilé si les nervures sur lesquelles il prend appui se déforment.

US-A-4 949 507 décrit un profilé équipé d'un enjoliveur métallique à section en C, qui est clipsé sur une partie de forme correspondante d'un élément métallique non noyé dans le matériau constitutif du profilé. Les opérations de montage de cet enjoliveur sont longues et coûteuses.

L'invention vise à remédier à ces inconvénients, en proposant un profilé pour encadrement de vitre mobile qui puisse être lui-même équipé d'un enjoliveur, sans fixation de celui-ci sur la carrosserie du véhicule.

Un autre but de l'invention est de proposer un tel profilé pour encadrement de vitre mobile, dans lequel l'enjoliveur qui l'équipe est verrouillé en position par le profilé lui-même, lors de sa mise en place sur l'encadrement de vitre.

L'invention a enfin pour but de proposer un tel profilé équipé d'un enjoliveur qui puisse être mis en place pour un coût réduit par rapport aux enjoliveurs de la technique antérieure.

A cet effet, l'invention a pour objet un profilé d'étanchéité pour encadrement d'une vitre mobile d'un véhicule, notamment d'un véhicule automobile, ce profilé étant en une matière résiliente dans laquelle est noyée une armature métallique et comprenant deux parties attenantes à sections en U inversées, l'une, dite pince, étant destinée à coiffer un bord saillant de l'encadrement de vitre, tandis que la seconde partie en U, dite coulisse, est destinée à guider et à recevoir en position de fermeture la portion périphérique de la glace mobile, ce profilé étant caractérisé en ce que l'armature de la branche du U de la coulisse destinée à être disposée vers l'extérieur du véhicule fait saillie latéralement en dehors de la matière résiliente et est recourbée à l'extérieur de cette branche, tandis qu'à la base de cette même branche, la matière résiliente forme un bossage au-dessous de la base du U, de manière à pouvoir fixer sur le profilé un enjoliveur à section transversale en C, par clipsage sur ledit bossage et sur la partie saillante recourbée de l'armature.

Avantageusement, de façon connue en soi, une lèvre souple en matière résiliente fera saillie à partir de la base de la coulisse du côté du bossage, de manière à être dirigée vers l'extérieur du véhicule et à être pincée entre le bossage et l'encadrement de vitre après mise en place du profilé sur celui-ci, en assurant ainsi le verrouillage en position de l'enjoliveur sur le profilé.

Le profilé qui vient d'être défini, équipé d'un enjoliveur à section en C, clipsé sur la partie saillante recourbée de l'armature et sur ledit bossage, constitue un autre objet de la présente invention.

Une forme de réalisation de l'invention va être décrite ci-après plus en détail, en référence aux dessins annexés.

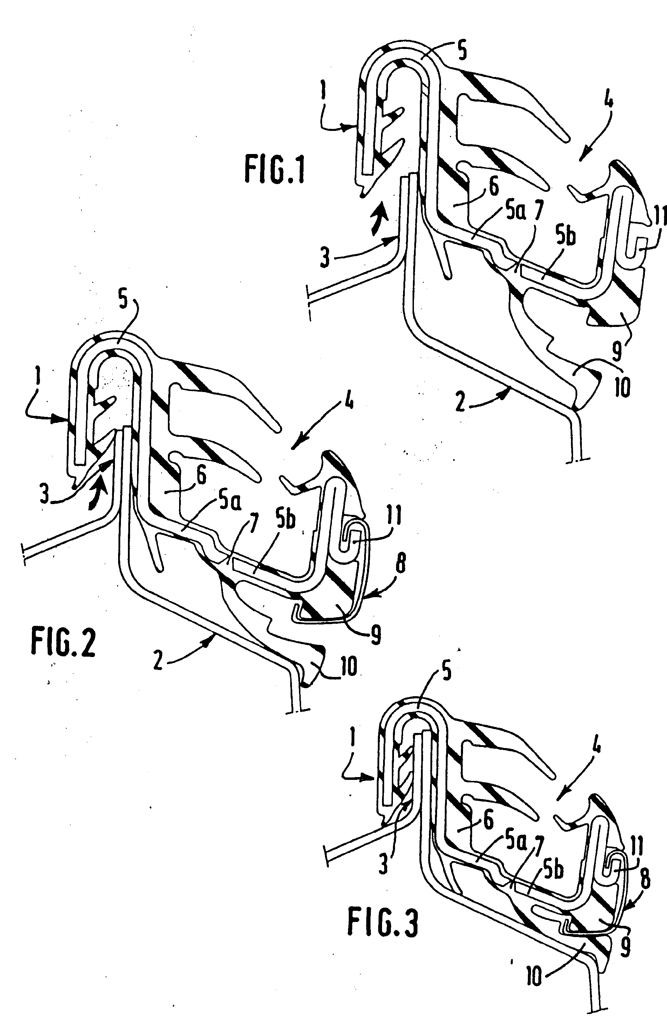

Sur ces dessins, les figures 1, 2 et 3 sont des coupes transversales du profilé conforme à l'invention, illustrant trois phases successives de sa mise en place sur un encadrement de vitre mobile d'une automobile.

Le profilé représenté sur les dessins comprend une partie 1 à section en U, formant pince, destinée à être rendue solidaire de l'encadrement 2 d'une vitre mobile d'une porte d'automobile, en coiffant une partie saillante ou feuillure 3 de cet encadrement. Cette partie 1 est raccordée à une seconde partie à section en U, ou coulisse 4, servant d'organe de guidage et d'étanchéité pour la vitre mobile.

Les sections en U des parties 1 et 4 sont inversées l'une par rapport à l'autre.

Comme décrit dans le certificat d'addition français n° 2 623 596 précité, la pince 1 et la coulisse 4 comprennent une armature métallique 5 gainée d'un élastomère 6. L'armature 5 est sectionnée dans la partie correspondant à la base du U de la coulisse pour définir deux brins 5a et 5b articulés entre eux au niveau de leur séparation par une charnière 7 en élastomère, qui permet un pivotement du brin 5b par rapport au brin 5a et une translation de ce brin 5a lorsque la glace vient prendre appui en fin de course (position où la glace est fermée) contre le fond de la coulisse 4.

Conformément à l'invention, l'armature métallique 5 fait saillie latéralement en dehors de l'élastomère 6 qui gaine la branche de la coulisse 4 disposée vers l'extérieur du véhicule et son bord latéral 11 est recourbé de manière à permettre l'accrochage d'un enjoliveur 8 à section en C. Cet enjoliveur 8 coiffe par ailleurs un bossage 9 de l'élastomère 6, ménagé sous la base de la coulisse 4, ici sensiblement au pied de la branche de cette coulisse en dehors de laquelle l'armature 5 fait saillie en 11.

Une lèvre souple 10 en élastomère fait saillie au-dessous de la base de la coulisse 4 et est dirigée vers l'extérieur du véhicule, de manière à pouvoir être pincée entre la base de la coulisse et l'encadrement de porte 2, lorsque le profilé est monté sur ce dernier (figure 3).

La mise en place du profilé sur l'encadrement de vitre s'effectue en trois temps. Dans un premier temps, illustré par la figure 1, le profilé repose sur l'encadrement de porte 2 et la pince 1 prend simplement appui sur la feuillure 3. Dans cette position, il est alors possible de clipser l'enjoliveur 8 sur la branche de la coulisse 4 tournée vers l'extérieur du véhicule, comme représenté sur la figure 2. Dans un troisième temps, la pince 5 est engagée à force sur la feuillure 3 de manière à être rendu solidaire de celle-ci et à appliquer fermement la coulisse 4 contre l'encadrement de porte, en repliant la lèvre 10 contre la base de la coulisse (figure 3). Dans cette position, la lèvre 10 prend appui contre la partie de l'enjoliveur 8 qui coiffe le bossage 9. Cette partie est ainsi prisonnière entre le bossage 9 et la lèvre 10 et l'enjoliveur est donc verrouillé en position sur le profilé.

L'invention apporte, par conséquent, un moyen simple et facile à mettre en oeuvre, car ne nécessitant pas de fixation de l'enjoliveur sur l'encadrement de porte par des moyens mécaniques, pour équiper de cet enjoliveur la partie externe d'un tel encadrement.

## Revendications

1. Profilé d'étanchéité pour encadrement (2) d'une vitre mobile d'un véhicule, notamment d'un véhicule automobile, ce profilé étant en une matière résiliente (6) dans laquelle est noyée d'une armature métallique (5) et comprenant deux parties attenantes à sections en U inversées, l'une, (1), dite pince, étant destinée à coiffer un bord saillant (3) de l'encadrement de vitre (2), tandis que la seconde partie en U, (4), dite coulisse, est destinée à guider et à recevoir en position de fermeture la portion périphérique de la glace mobile, ce profilé étant caractérisé en ce que l'armature (5) de la branche du U de la coulisse destinée à être disposée vers l'extérieur du véhicule fait saillie latéralement (en 11) en dehors de la matière résiliente et est recourbée à l'extérieur de cette branche, tandis qu'à la base de cette même branche, la matière résiliente forme un bossage (9) au-dessous de la base du U, de manière à pouvoir fixer sur le profilé un enjoliveur (8) à section transversale en C, par clipsage sur ledit bossage (9) et sur la partie saillante recourbée (11) de l'armature.

2. Profilé selon la revendication 1, caractérisé en ce qu'une lèvre souple (10) en matière résiliente fait saillie à partir de la base de la coulisse (4) du côté du bossage (9) de manière à être dirigée vers l'extérieur du véhicule et à être pincée entre le bossage (9) et l'encadrement de vitre, après mise en place du profilé sur celui-ci.

3. Profilé selon l'une des revendications 1 et 2 équipé d'un enjoliveur clipsé sur le bossage (9) et sur la partie (11) de l'armature (5) faisant saillie en dehors de la branche de la coulisse (4) contiguë à l'extérieur du véhicule.

## Patentansprüche

1. Dichtungsprofil für die Einfassung einer beweglichen Scheibe eines Fahrzeugs, insbesondere eines Kraftfahrzeugs, wobei das Profil aus einem elastischen Werkstoff (6) ist, in den eine Metallarmierung (5) eingebettet ist, und zwei an Abschnitte in Form eines umgekehrten U angrenzende Teile aufweist, von denen einer (1), genannt der Klemmteil, dazu bestimmt ist, einen vorspringenden Rand (3) der Scheibeneinfassung (2) abzudecken, während der zweite U-förmige Teil (4), Führungsteil genannt, dazu bestimmt ist, den Umfangsabschnitt der beweglichen Scheibe zu führen und in der Schließstellung zu halten, wobei das Profil dadurch **gekennzeichnet** ist, daß die Armatur (5) des Zweiges des U des Führungsteils dazu bestimmt ist, zum Äußeren des Fahrzeugs hin (bei 11) seitlich vorzuspringen, außerhalb des federnden Werkstoffs und zum Äußeren des Zweiges hin umgebogen ist, während an der Basis des gleichen Zweigs der federnde Werkstoff einen Vorsprung (9) unterhalb der Basis des U bildet, derart, daß ein Zierprofil (8) mit C-förmigem Querschnitt auf dem Profil dadurch befestigt werden kann, daß es auf den besagten Vorsprung (9) und auf den vorspringenden umgebogenen Teil (11) der Armierung aufgeklipst wird.

2. Profil nach Anspruch 1, dadurch gekennzeichnet, daß eine weiche Lippe (10) aus federndem Werkstoff an der Basis des Führungsteils (4) an der Seite des Vorsprungs (9) derart vorspringt, daß sie zum Äußeren des Fahrzeugs hin geleitet wird und zwischen den Vorsprung (9) und die Scheibeneinfassung eingeklemmt wird, nachdem das Profil auf der Scheibeneinfassung montiert ist.

3. Profil nach einem der Ansprüche 1 oder 2, ausgerüstet mit einem Zierprofil, das auf den Vorsprung (9) und auf den Teil (11) der Armatur (5) aufgeklipst ist, die außerhalb des Zweiges des Führungsteils (4) vorspringt, der an das Äußere des Fahrzeugs angrenzt.

## Claims

1. A shaped sealing member for the frame (2) of a movable window of a vehicle, in particular a motor vehicle, the shaped member being of a resilient material (6) in which a metal reinforcement (5) is embedded and comprising two adjoining portions of reversed U-shaped sections, one portion (1) which is referred to as a gripping portion being intended to fit over a projecting edge (3) of the window frame (2) while the second U-shaped portion (4) which is referred to as a sliding guide is intended to guide and receive in the closure position the peripheral portion of the movable glass, said shaped member being characterised in that the reinforcement (5) of the limb of the U-shape of the sliding guide, which is intended to be disposed towards the exterior of the vehicle, projects laterally (at 11) out of the resilient material and is bent back on to the outside of said limb while at the base of said same limb the resilient material forms a boss (9) below the base of the U-shape, in such a way that an embellisher trim portion (8) of C-shaped cross-section can be fixed on the shaped member by clipping on to said boss (9) and by the bent-back projecting portion (11) of the reinforcement.

2. A shaped member according to claim 1 characterised in that a flexible lip (10) of resilient material projects from the base of the sliding guide (4) on the side of the boss (9) in such a way as to be directed towards the exterior of the vehicle and to be gripped between the boss (9) and the window frame after the shaped member has been set in position on the latter.

3. A shaped member according to one of claims 1 and 2 which is fitted with an embellisher trim portion clipped on to the boss (9) and on to the portion (11) of the reinforcement (5) which projects out of the limb of the sliding guide (4) which is contiguous with the exterior of the vehicle.
